# EUROPÄISCHE PATENTSCHRIFT

(11) **EP 3 262 305 B1**
(45) Veröffentlichungstag und Bekanntmachung des Hinweises auf die Patenterteilung: **18.09.2019**
(21) Anmeldenummer: 16701436.4
(22) Anmeldetag: 19.01.2016
(51) Int. Cl.: F04D 29/58, F04D 25/08, F04D 25/06, F02B 37/10, F02B 39/10, F02B 39/00, H02K 1/14, H02K 1/20, H02K 5/128, F04D 29/42, H02K 9/19, H02K 9/22

(54) **LADER, INSBESONDERE ABGASTURBOLADER, FÜR EINE ANTRIEBSEINRICHTUNG SOWIE ENTSPRECHENDE ANTRIEBSEINRICHTUNG**
SUPERCHARGER, ESPECIALLY A TURBOCHARGER, FOR A DRIVE DEVICE AND ASSOCIATED DRIVE DEVICE
SURALIMENTEUR, EN PARTICULIER UN TURBOCOMPRESSEUR, POUR UN DISPOSITIF D'ENTRAÎNEMENT ET DISPOSITIF D'ENTRAÎNEMENT ASSOCIÉ

(30) Priorität: 27.02.2015 DE 102015203596
(43) Veröffentlichungstag der Anmeldung: 03.01.2018
(73) Patentinhaber: Robert Bosch GmbH, 70442 Stuttgart (DE)
(72) Erfinder: BAEUERLE, Michael, 71735 Eberdingen (DE); NAU, Michael, 72175 Dornhan/Aischfeld (DE)
(86) Internationale Anmeldenummer: PCT/EP2016/051005
(87) Internationale Veröffentlichungsnummer: WO 2016/134886

(56) Entgegenhaltungen:
- EP-A1- 1 995 426
- EP-A1- 2 305 981
- EP-A2- 2 072 824
- WO-A1-2014/210093

## Beschreibung

Die Erfindung betrifft einen Lader, insbesondere Abgasturbolader, für eine Antriebseinrichtung, der einen mittels eines Medienspaltmotors elektrisch unterstützbaren oder antreibbaren Verdichter aufweist, wobei der Medienspaltmotor einen mit einer Lagerwelle eines Verdichterlaufrads des Verdichters wirkverbundenen Rotor sowie einen den Rotor in Umfangsrichtung bezüglich einer Drehachse der Lagerwelle wenigstens bereichsweise umgreifenden Stator aufweist. Die Erfindung betrifft weiterhin eine Antriebseinrichtung.

Der Lader kann Bestandteil der Antriebseinrichtung sein. Die Antriebseinrichtung ist beispielsweise einem Kraftfahrzeug zugeordnet und dient dem Antreiben des Kraftfahrzeugs. Die Antriebseinrichtung verfügt beispielsweise über ein Antriebsaggregat, insbesondere eine Brennkraftmaschine. Weiterhin ist der Antriebseinrichtung der Lader zugeordnet. Mithilfe des Laders kann Luft, insbesondere Frischluft, die der Antriebseinrichtung zugeführt wird, verdichtet und insoweit von einem niedrigeren ersten Druckniveau auf ein höheres zweites Druckniveau gebracht werden. Nach dem Verdichten der Luft mittels des Laders beziehungsweise mithilfe des Verdichters des Laders, wird sie dem Antriebsaggregat zugeführt. Auf diese Art und Weise kann die Effizienz und/oder die Leistung des Antriebsaggregats verbessert werden.

Ist der Lader als Abgasturbolader ausgestaltet, so verfügt er neben dem Verdichter über eine Turbine, welche während eines Betriebs der Antriebseinrichtung von Abgas durchströmt beziehungsweise überströmt wird. Das Abgas wird beispielsweise von dem Antriebsaggregat, insbesondere also der Brennkraftmaschine, erzeugt. Bei dem Durchströmen der Turbine wird dem Abgas Enthalpie und/oder Strömungsenergie entnommen und in kinetische Energie umgewandelt, die anschließend zum Antreiben des Verdichters herangezogen wird. Entsprechend sind der Lader und insbesondere das mit diesem erreichbare Druckverhältnis, also das Verhältnis zwischen dem zweiten Druckniveau und dem ersten Druckniveau, stark von einem Betriebspunkt der Antriebseinrichtung abhängig.

Aus diesem Grund ist dem Lader der Medienspaltmotor zugeordnet. Mit dessen Hilfe kann der Verdichter elektrisch unterstützt werden. Auch kann der Verdichter allein mittels des Medienspaltmotors angetrieben werden. Zu diesem Zweck ist der Medienspaltmotor mit der Lagerwelle des Verdichterlaufrads des Verdichters wirkverbunden, sodass mittels des Medienspaltmotors ein Drehmoment auf die Lagerwelle und mithin das Verdichterlaufrad, welches mit der Lagerwelle starr und/oder permanent wirkverbunden ist, aufgebracht werden kann. Neben dem Rotor verfügt der Medienspaltmotor über den Stator, welcher den Rotor wenigstens bereichsweise umgreift, insbesondere in Umfangsrichtung bezüglich der Drehachse der Lagerwelle beziehungsweise des Verdichterlaufrads.

Der Medienspaltmotor zeichnet sich dadurch aus, dass er einen sehr großen Luftspalt zwischen dem Stator und dem Rotor aufweist. Beispielsweise beträgt ein Außendurchmesser des Rotors bezogen auf einen Innendurchmesser des Stators höchstens 50 %. Der zwischen dem Außenumfang des Rotors und dem Innenumfang des Stators liegende Bereich wird als Luftspalt bezeichnet. Aufgrund des im Vergleich mit herkömmlichen Elektromotoren sehr großen Luftspalts bedarf es vergleichsweise großer Statorspulen mit hoher Induktivität. Diese Induktivität verursacht hohe Scheinströme, welche sowohl in den Spulen als auch in einer Leistungselektronik des Medienspaltmotors elektrische Verluste verursachen können, beispielsweise in Form von Wärme.

### Stand der Technik

Aus dem Stand der Technik ist beispielsweise die Veröffentlichung "Hybridturbolader mit neuer Elektromotorentechnik", MTZ, 03/2014, Seiten 50-55, bekannt.

Aus der EP 1 995 426 A1 ist ein Elektromotor zur Förderung von Medien bekannt, der einen Stator und einen Rotor sowie zwischen Stator und Rotor eine Mediendurchlassöffnung aufweist.

### Offenbarung der Erfindung

Demgegenüber weist der Lader mit den Merkmalen des Anspruchs 1 den Vorteil auf, dass eine verbesserte Kühlung des Laders erzielt wird. Dies wird erfindungsgemäß erreicht, indem eine Leistungselektronik zur Ansteuerung wenigstens einer elektrischen Wicklung des Stators die Drehachse in Umfangsrichtung wenigstens bereichsweise umgreift, wobei zur Kühlung des Stators und der Leistungselektronik ein in Berührkontakt mit dem Stator und der Leistungselektronik vorliegender Kühlmantel vorgesehen ist.

Die Leistungselektronik ist mit der wenigstens einen elektrischen Wicklung des Stators elektrisch verbunden. Sie dient der Ansteuerung der Wicklung, vorzugsweise mehrerer Wicklungen des Stators zur Bereitstellung eines elektromagnetischen Drehfelds, welches eine Drehbewegung des Rotors bewirkt. Idealerweise ist die Leistungselektronik nun derart angeordnet, dass sie die Drehachse zumindest bereichsweise umgreift. Vorzugsweise umgreift die Leistungselektronik die Drehachse vollständig, ist also in Umfangsrichtung durchgehend ausgebildet.

Die Leistungselektronik umgreift den Stator in Umfangsrichtung zumindest teilweise. Das bedeutet, dass wenigstens ein Teil der Leistungselektronik an derselben Axialposition beziehungsweise denselben Axialpositionen vorliegt wie der Stator. Vorzugsweise ist die Leistungselektronik in radialer Richtung weiter außen liegend angeordnet als der Stator. Zusätzlich oder alternativ kann wenigstens ein Bereich der Leistungselektronik in axialer Richtung gesehen neben dem Stator vorliegen, sich insbesondere in axialer Richtung an diesen anschließen.

Durch eine derartige Anordnung der Leistungselektronik kann als vorteilhafter Nebeneffekt eine aufwändige Verkabelung zwischen Leistungselektronik und Stator beziehungsweise der elektrischen Wicklung des Stators vermieden werden. Vielmehr kann die die Leistungselektronik mit der wenigstens einen Wicklung verbindende wenigstens eine Leitung äußerst kurz ausfallen. Dadurch ergibt sich ein deutlich reduzierter Aufwand zur Sicherstellung der elektromagnetischen Verträglichkeit (EMV). Es kann vorgesehen sein, dass die Leistungselektronik wenigstens bereichsweise an dem Stator anliegt, insbesondere in Umfangsrichtung gesehen durchgehend an dem Stator anliegt.

Zusätzlich ist der Kühlmantel vorgesehen, mittels welchem der Stator und die Leistungselektronik gekühlt werden können. Der Kühlmantel steht zu diesem Zweck mit dem Stator und der Leistungselektronik in Wärmeübertragungsverbindung. Dabei steht der Kühlmantel mit dem Stator und mit der Leistungselektronik in Berührkontakt, liegt also zumindest bereichsweise an diesen beziehungsweise einem entsprechenden Gehäuse, insbesondere einem Elektronikgehäuse der Leistungselektronik, an. Der Kühlmantel weist wenigstens einen Strömungskanal auf, welcher während eines Betriebs der Antriebseinrichtung von einem Kühlmittel durchströmt werden kann beziehungsweise durchströmt wird. Besonders bevorzugt umgreift der Kühlmantel analog zu der Leistungselektronik die Drehachse in Umfangsrichtung wenigstens bereichsweise, insbesondere vollständig. Dabei kann er wenigstens bereichsweise an derselben Axialposition beziehungsweise denselben Axialpositionen vorliegen wie der Stator und/oder die Leistungselektronik. Beispielsweise liegt er in radialer Richtung weiter außen als der Stator.

Der Kühlmantel liegt sowohl an dem Stator als auch an der Leistungselektronik beziehungsweise dem Elektronikgehäuse mit Berührkontakt an. Zu diesem Zweck steht der Kühlmantel mit seinem Innenumfang in Berührkontakt mit einem Außenumfang des Stators, während eine in axialer Richtung gesehen den Kühlmantel begrenzende Stirnfläche an der Leistungselektronik, insbesondere einer Stirnfläche der Leistungselektronik anliegt, bevorzugt jeweils in Umfangsrichtung durchgehend. Beispielsweise ist der Kühlmantel dabei in axialer Richtung gesehen zwischen der Leistungselektronik und einem Verdichterauslass des Verdichters angeordnet, sodass er mit der Stirnfläche an der Leistungselektronik und mit einer der Stirnfläche in axialer Richtung gegenüberliegenden weiteren Stirnfläche an einem Verdichtergehäuse, insbesondere dem Verdichterauslass beziehungsweise einem Verdichterauslassgehäuse des Laders anliegt.

Eine bevorzugte Ausgestaltung der Erfindung sieht vor, dass der Kühlmantel den Stator in Umfangsrichtung wenigstens teilweise umgreift. Auf eine derartige Ausgestaltung wurde vorstehend bereits eingegangen. Besonders bevorzugt umgreift der Kühlmantel den Stator in Umfangsrichtung selbstverständlich vollständig, wobei er durchgehend an diesem anliegt. Mit einer derartigen Ausgestaltung des Kühlmantels ist eine besonders effiziente Kühlung des Stators mithilfe des Kühlmantels möglich.

Eine Weiterbildung der Erfindung sieht vor, dass der Kühlmantel mit seinem Innenumfang in Berührkontakt mit einem Außenumfang des Stators steht. Der Kühlmantel wird wenigstens bereichsweise in radialer Richtung gesehen innen von dem Innenumfang begrenzt. Wenigstens ein Bereich des Innenumfangs, besonders bevorzugt jedoch der gesamte Innenumfang, kann nun an dem Stator anliegen. Beispielsweise liegt der Innenumfang dabei an dem Außenumfang des Stators an, wobei der Außenumfang den Stator in radialer Richtung nach außen wenigstens bereichsweise begrenzt. Besonders bevorzugt ist dabei ein flächiger Kontakt zwischen dem Innenumfang und dem Außenumfang. Beispielsweise kann zwischen dem Innenumfang und dem Außenumfang ein Wärmeübertragungsmittel, beispielsweise eine Wärmeleitpaste oder dergleichen, eingebracht sein.

Eine weitere Ausgestaltung der Erfindung sieht vor, dass eine den Kühlmantel in axialer Richtung begrenzende Stirnfläche an der Leistungselektronik, insbesondere einer Stirnfläche der Leistungselektronik, anliegt. Die Stirnfläche begrenzt den Kühlmantel wenigstens bereichsweise, insbesondere vollständig, in axialer Richtung. Die Stirnfläche soll nun an der Leistungselektronik zumindest bereichsweise anliegen. Beispielsweise steht sie zu diesem Zweck in Berührkontakt mit der Stirnfläche der Leistungselektronik, wobei die Stirnfläche die Leistungselektronik in axialer Richtung wenigstens bereichsweise, insbesondere vollständig, begrenzt. Zusätzlich oder alternativ kann es vorgesehen sein, dass die Stirnfläche des Kühlmantels und/oder eine weitere Stirnfläche des Kühlmantels an dem Stator anliegen/anliegt, insbesondere an einer Stirnfläche des Stators. Die Stirnfläche des Stators begrenzt diesen in axialer Richtung wenigstens bereichsweise. Bei einer derartigen Ausgestaltung kann insoweit vorgesehen sein, dass der Kühlmantel sowohl mit seinem Innenumfang in Berührkontakt mit dem Außenumfang des Stators steht als auch zusätzlich mit seiner Stirnfläche und/oder der weiteren Stirnfläche an dem Stator anliegt. Auf diese Art und Weise wird eine besonders effiziente Kühlung des Stators ermöglicht.

Eine bevorzugte Ausgestaltung der Erfindung sieht vor, dass der Kühlmantel in axialer Richtung gesehen zwischen der Leistungselektronik und einem Verdichtergehäuse des Verdichters angeordnet ist. Beispielsweise liegt also der Kühlmantel zwischen der Stirnfläche der Leistungselektronik sowie einer Stirnfläche des Verdichtergehäuses vor. Das Verdichtergehäuse dient insbesondere der Aufnahme eines Laufrads des Verdichters. Während selbstverständlich der Kühlmantel in axialer Richtung an der Leistungselektronik und dem Verdichtergehäuse des Verdichters anliegen kann, kann auch eine beabstandete Anordnung des Kühlmantels von zumindest einem dieser Elemente, beispielsweise beider Elemente, vorgesehen sein. Insoweit kann beispielsweise der Kühlmantel einerseits an der Leistungselektronik und andererseits an dem Verdichtergehäuse beziehungsweise dessen Stirnfläche anliegen. Es kann jedoch auch vorgesehen sein, dass der Kühlmantel zwar an der Leistungselektronik anliegt, jedoch in axialer Richtung von dem Verdichtergehäuse beabstandet ist. Umgekehrt kann es vorgesehen sein, dass der Kühlmantel an dem Verdichtergehäuse anliegt, jedoch in axialer Richtung von der Leistungselektronik beabstandet ist.

In einer weiteren bevorzugten Ausgestaltung der Erfindung ist vorgesehen, dass der Kühlmantel mit einer der Stirnfläche gegenüberliegenden weiteren Stirnfläche an dem Verdichtergehäuse anliegt. Auf eine derartige Ausgestaltung wurde vorstehend bereits hingewiesen. Beispielsweise ist hierbei der Kühlmantel in axialer Richtung gesehen zwischen der Leistungselektronik und dem Verdichtergehäuse angeordnet und liegt dabei mit der weiteren Stirnfläche an dem Verdichtergehäuse beziehungsweise der Stirnfläche des Verdichtergehäuses an.

Eine weitere Ausgestaltung der Erfindung sieht vor, dass wenigstens eine elektrische Leitung einer Verkabelung zwischen Leistungselektronik und elektrischer Wicklung des Stators in einem zwischen Leistungselektronik und Stator vorliegenden Spalt, insbesondere Ringspalt, verläuft. Die Verkabelung dient der Herstellung einer elektrischen Verbindung zwischen der Leistungselektronik und der elektrischen Wicklung des Stators. Die Verkabelung weist die wenigstens eine elektrische Leitung auf. Um eine besonders einfache Verkabelung zu realisieren, verläuft die elektrische Leitung durch den Spalt, welcher zwischen der Leistungselektronik und dem Stator, insbesondere in radialer Richtung, ausgebildet ist. Der Spalt kann dabei als Ringspalt ausgebildet sein, also wenigstens bereichsweise, insbesondere vollständig, in Umfangsrichtung durchgehend vorliegen. Der Spalt umgreift somit den Stator beziehungsweise die elektrische Wicklung in Umfangsrichtung wenigstens bereichsweise, insbesondere vollständig. Gleichzeitig kann die Leistungselektronik den Spalt in Umfangsrichtung wenigstens bereichsweise, insbesondere vollständig, umgreifen. Eine besonders einfache Verkabelung wird erzielt, wenn die elektrische Leitung im Wesentlichen in radialer Richtung durch den Spalt verläuft, weil sie auf diese Art und Weise besonders kurz ausgeführt werden kann.

Eine weitere vorteilhafte Ausgestaltung der Erfindung sieht vor, dass der Kühlmantel zusätzlich zur Kühlung von an einem Verdichterauslass aus dem Verdichter austretender Luft und/oder zur Kühlung eines Verdichtergehäuses des Verdichters vorgesehen ist. Beispielsweise liegt zu diesem Zweck, wie bereits vorstehend erläutert, der Kühlmantel wenigstens bereichsweise an einem Gehäuse des Laders, insbesondere dem Verdichtergehäuse beziehungsweise dem Gehäuse des Verdichterauslasses, an. Der Verdichterauslass ist beispielsweise derjenige Bereich des Verdichters, durch welchen die mittels des Verdichters verdichtete Luft aus dem Verdichter ausströmt. Durch die Kühlung der Luft wird eine Ladeluftkühlung realisiert, durch welche die Effizienz der Antriebseinrichtung weiter verbessert wird. Zusätzlich oder alternativ kann die Kühlung des Verdichtergehäuses vorgesehen sein.

Schließlich kann in einer weiteren Ausgestaltung der Erfindung vorgesehen sein, dass der Kühlmantel an einen Kühlkreislauf angeschlossen ist, in welchem ein Ladeluftkühler der Antriebseinrichtung und/oder eine Lagerkühlung und/oder eine Lagergehäusekühlung vorliegen/vorliegt. Der Kühlkreislauf ist beispielsweise als Niedertemperaturkreislauf ausgestaltet. In dem Kühlkreislauf ist zudem der Ladeluftkühler vorgesehen, mittels welchem Luft gekühlt wird, die zuvor mithilfe des Laders beziehungsweise des Verdichters verdichtet wurde. Der Ladeluftkühler liegt insoweit hinsichtlich der Luft stromabwärts des Verdichters vor. Insbesondere ist er strömungstechnisch an den Verdichterauslass und/oder das Verdichtergehäuse angeschlossen. Besonders vorteilhaft ist es insoweit, wenn neben dem Ladeluftkühler auch die vorstehend erläuterte Kühlung der aus dem Verdichter austretenden Luft mittels des Kühlmantels realisiert ist. Somit liegt eine zweistufige und besonders effektive Ladeluftkühlung vor. Alternativ kann vorgesehen sein, dass der Ladeluftkühler in das Verdichtergehäuse integriert ist.

Zusätzlich oder alternativ kann es vorgesehen sein, dass an den Kühlkreislauf eine Lagerkühlung und/oder eine Lagergehäusekühlung angeschlossen sind. Die Lagerkühlung dient der Kühlung wenigstens eines Lagers der Antriebseinrichtung, insbesondere des Laders. Das Lager kann in einem Lagergehäuse angeordnet sein, welches wiederum die Lagergehäusekühlung aufweist. Das Vorsehen der Lagerkühlung und/oder der Lagergehäusekühlung ist insbesondere bei Ausgestaltung der Brennkraftmaschine als Ottobrennkraftmaschine sinnvoll.

Die Erfindung betrifft weiterhin eine Antriebseinrichtung mit einem Lader, beispielsweise Abgasturbolader, insbesondere nach einem oder mehreren der vorhergehenden Ansprüche, dessen Verdichter mittels eines Medienspaltmotors elektrisch unterstützbar oder antreibbar ist, wobei der Medienspaltmotor einen mit einer Lagerwelle eines Verdichterlaufrads des Verdichters wirkverbundenen Rotor sowie einen den Rotor in Umfangsrichtung bezüglich einer Drehachse der Lagerwelle wenigstens bereichsweise umgreifenden Stator aufweist. Dabei ist vorgesehen, dass eine Leistungselektronik zur Ansteuerung wenigstens einer elektrischen Wicklung des Stators die Drehachse in Umfangsrichtung wenigstens bereichsweise umgreift, wobei zur Kühlung des Stators und/oder der Leistungselektronik ein in Berührkontakt mit dem Stator und/oder der Leistungselektronik vorliegender Kühlmantel vorgesehen ist.

Auf die Vorteile einer derartigen Ausgestaltung der Antriebseinrichtung beziehungsweise des Laders wurde bereits hingewiesen. Sowohl die Antriebseinrichtung als auch der Lader können gemäß den vorstehenden Ausführungen weitergebildet sein, sodass insoweit auf diese verwiesen wird.

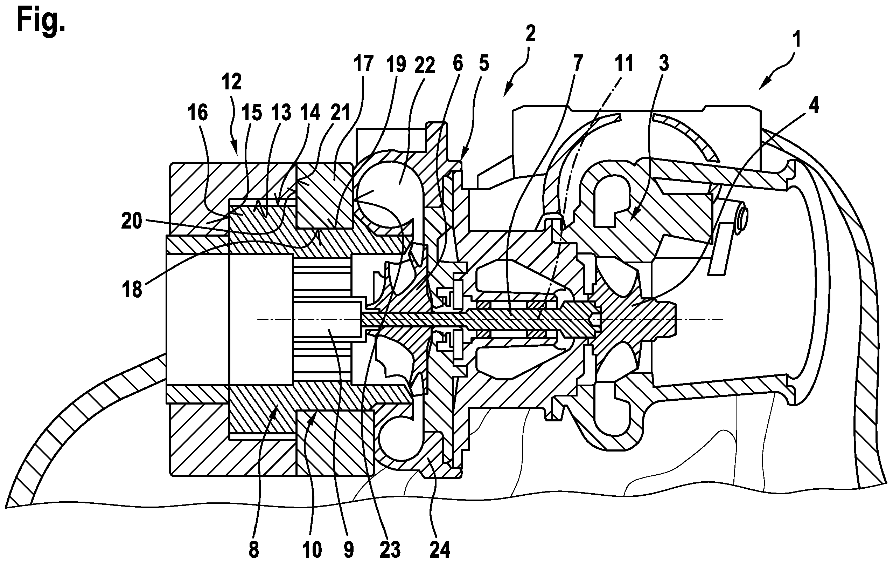

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine Längsschnittdarstellung eines Bereichs einer Antriebseinrichtung, insbesondere eines Laders.

Die Figur zeigt eine Längsschnittdarstellung durch einen Bereich einer Antriebseinrichtung 1, insbesondere durch einen beispielsweise als Abgasturbolader ausgestalteten Lader 2 für die Antriebseinrichtung 1. Der Lader 2 verfügt vorzugsweise über eine Turbine 3 mit einem Turbinenlaufrad 4 sowie über einen Verdichter 5 mit einem Verdichterlaufrad 6. Das Turbinenlaufrad 4 und das Verdichterlaufrad 6 sind über eine Lagerwelle 7 wirkverbunden, vorzugsweise starr und/oder permanent. Das bedeutet, dass eine Drehbewegung des Turbinenlaufrads 4 ebenso auf das Verdichterlaufrad 6 übertragen wird.

Der Lader 2 ist mittels eines Medienspaltmotors 8 elektrisch unterstützbar oder antreibbar, wobei der Medienspaltmotor 8 einen Rotor 9 sowie einen Stator 10 aufweist. Der Rotor ist mit dem Verdichterlaufrad 6 wirkverbunden, vorzugsweise über die Lagerwelle 7. Zu diesem Zweck ist beispielsweise der Rotor 9 starr und/oder permanent mit der Lagerwelle 7 wirkverbunden, insbesondere ist er an dieser befestigt. Der Stator 10 umgreift den Rotor 9 in Umfangsrichtung bezüglich einer Drehachse 11 der Lagerwelle 7 wenigstens bereichsweise, insbesondere vollständig.

Es ist nun vorgesehen, dass eine Leistungselektronik 12, welche der Ansteuerung des Medienspaltmotors 8 beziehungsweise wenigstens einer elektrischen Wicklung des Stators 10 dient, die Drehachse 11 in Umfangsrichtung ebenfalls wenigstens bereichsweise, insbesondere vollständig umgreift. Dies hat den Vorteil, dass eine aufwändige Verkabelung zwischen der Leistungselektronik 12 und dem Stator 10 entfallen kann. Die Leistungselektronik 12 kann derart angeordnet sein, dass ein Innenumfang 13 der Leistungselektronik 12 an einem Außenumfang 14 des Stators 10 anliegt.

Besonders bevorzugt ist jedoch der Innenumfang 13 der Leistungselektronik von dem Außenumfang 14 des Stators 10 in radialer Richtung beabstandet angeordnet, sodass zwischen diesen ein Spalt, insbesondere ein Ringspalt, ausgebildet ist. Durch diesen Spalt kann eine elektrische Leitung der Verkabelung zwischen Leistungselektronik 12 und elektrischer Wicklung des Stators 10 verlaufen, um so eine besonders kurze Leitung zu realisieren. Zusätzlich oder alternativ kann die Leistungselektronik 12 in axialer Richtung bezüglich der Drehachse 11 gesehen wenigstens bereichsweise neben dem Stator 10 vorliegen. In diesem Fall liegt beispielsweise eine Stirnfläche 15 der Leistungselektronik 12 an einer Stirnfläche 16 des Stators 10 an, insbesondere in Umfangsrichtung durchgehend.

Weiterhin ist ein Kühlmantel 17 vorgesehen, mittels welchem der Stator 10 und/oder die Leistungselektronik 12 gekühlt werden. Der Kühlmantel 17 umgreift die Drehachse 11 in Umfangsrichtung wenigstens bereichsweise, insbesondere vollständig. Dabei steht er zumindest bereichsweise mit dem Stator 10 und/oder der Leistungselektronik 12 in Berührkontakt, liegt also an diesen an. Beispielsweise ist es dabei vorgesehen, dass ein Innenumfang 18 des Kühlmantels 17 an einem Außenumfang 19 des Stators 10 anliegt. Zusätzlich oder alternativ kann eine Stirnfläche 20 des Kühlmantels 17 an einer Stirnfläche 21 des Stators 10 anliegen, vorzugsweise in Umfangsrichtung durchgehend.

In der hier dargestellten Ausführungsform der Antriebseinrichtung 1 ist der Kühlmantel 17 in axialer Richtung gesehen zwischen der Leistungselektronik 12 und einem Verdichterauslass 22 angeordnet. Besonders bevorzugt liegt er dabei nicht lediglich mit seiner Stirnfläche 20 an der Stirnfläche 21 der Leistungselektronik 12 an, sondern zusätzlich mit einer weiteren Stirnfläche 23 an dem Verdichterauslass 22 beziehungsweise einem Verdichterauslassgehäuse 24. Mithilfe des Kühlmantels 17 kann insoweit eine Ladeluftkühlung der von dem Verdichter 5 verdichteten Luft erzielt werden.

Der Lader 2 dient dem Verdichten von Luft, welche nachfolgend einem hier nicht dargestellten Antriebsaggregat der Antriebseinrichtung 1 zugeführt werden kann.

Mithilfe der vorstehend beschriebenen Ausgestaltung der Antriebseinrichtung 1 beziehungsweise der erläuterten Vorgehensweise wird eine zuverlässige Kühlung von Stator 10 und/oder Leistungselektronik 12 sichergestellt. Schließlich wird eine Montage des Laders 2 vereinfacht und weiterhin eine deutlich einfachere Verkabelung realisiert.

## Patentansprüche

1. Lader (2), insbesondere Abgasturbolader, für eine Antriebseinrichtung (1), der einen mittels eines Medienspaltmotors (8) elektrisch unterstützbaren oder antreibbaren Verdichter (5) aufweist, wobei der zwischen einem Verdichtereinlass und einem Verdichterlaufrad (6) des Verdichters (5) angeordnete Medienspaltmotor (8) einen mit einer Lagerwelle (7) des Verdichterlaufrads (6) wirkverbundenen Rotor (9) sowie einen den Rotor (9) in Umfangsrichtung bezüglich einer Drehachse (11) der Lagerwelle (7) wenigstens bereichsweise umgreifenden Stator (10) aufweist, **dadurch gekennzeichnet, dass** eine Leistungselektronik (12) zur Ansteuerung wenigstens einer elektrischen Wicklung des Stators (10) die Drehachse (11) in Umfangsrichtung wenigstens bereichsweise umgreift, wobei zur Kühlung des Stators (10) und der Leistungselektronik (12) ein in Berührkontakt mit dem Stator (10) und der Leistungselektronik (12) vorliegender Kühlmantel (17) vorgesehen ist, wobei der Kühlmantel (17) in axialer Richtung gesehen zwischen der Leistungselektronik (12) und einem Verdichtergehäuse des Verdichters (5) angeordnet ist und mit seinem Innenumfang in Berührkontakt mit einem Außenumfang des Stators steht.

2. Lader nach Anspruch 1, **dadurch gekennzeichnet, dass** der Kühlmantel (17) den Stator (10) in Umfangsrichtung wenigstens teilweise umgreift.

3. Lader nach einem der vorhergehenden Ansprüche, **dadurch gekennzeichnet, dass** eine den Kühlmantel (17) in axialer Richtung begrenzende Stirnfläche an der Leistungselektronik, insbesondere einer Stirnfläche der Leistungselektronik, anliegt.

4. Lader nach einem der vorhergehenden Ansprüche, **dadurch gekennzeichnet, dass** der Kühlmantel (17) mit einer der Stirnfläche gegenüberliegenden weiteren Stirnfläche an dem Verdichtergehäuse anliegt.

5. Lader nach einem der vorhergehenden Ansprüche, **dadurch gekennzeichnet, dass** wenigstens eine elektrische Leitung einer Verkabelung zwischen Leistungselektronik (12) und elektrischer Wicklung des Stators (10) in einem zwischen Leistungselektronik (12) und Stator vorliegenden Spalt, insbesondere Ringspalt, verläuft.

6. Lader nach einem der vorhergehenden Ansprüche, **dadurch gekennzeichnet, dass** der Kühlmantel (17) zusätzlich zur Kühlung von an einem Verdichterauslass (22) aus dem Verdichter (5) austretender Luft und/oder zur Kühlung eines Verdichtergehäuses des Verdichters (5) vorgesehen ist.

7. Lader nach einem der vorhergehenden Ansprüche, **dadurch gekennzeichnet, dass** der Kühlmantel (17) an einen Kühlkreislauf angeschlossen ist, in welchem ein Ladeluftkühler der Antriebseinrichtung (1) und/oder eine Lagerkühlung und/oder eine Lagergehäusekühlung vorliegt.

8. Antriebseinrichtung (1) mit einem Lader (2) nach einem oder mehreren der vorhergehenden Ansprüche.

## Claims

1. Supercharger (2), in particular turbocharger, for a drive device (1), which has a compressor (5) which can be assisted electrically or driven by means of a media gap motor (8), wherein the media gap motor (8) which is arranged between a compressor inlet and a compressor impeller (6) of the compressor (5), and a rotor (9) which is operatively connected to a bearing shaft (7) of the compressor impeller (6), and a stator (10) which at least in certain areas surrounds the rotor (9) in the circumferential direction with respect to a rotational axis (11) of the rotor shaft (7), **characterized in that** power electronics (12) for actuating at least one electrical winding of the stator (10) engage at least in certain areas around the rotational axis (11) in the circumferential direction, wherein in order to cool the stator (10) and the power electronics (12) a cooling jacket (17) which is in contact with the stator (10) and the power electronics (12) is provided, wherein the cooling jacket (17) is arranged, viewed in the axial direction, between the power electronics (12) and a compressor housing of the compressor (5) and is in contact with its internal circumference with an external circumference of the stator.

2. Supercharger according to Claim 1, **characterized in that** the cooling jacket (17) engages around the stator (10) at least partially in the circumferential direction.

3. Supercharger according to one of the preceding claims, **characterized in that** an end face, delimiting the cooling jacket (17) in the axial direction, bears against the power electronics, in particular against an end face of the power electronics.

4. Supercharger according to one of the preceding claims, **characterized in that** the cooling jacket (17) bears against the compressor housing with a further end face lying opposite the end face.

5. Supercharger according to one of the preceding claims, **characterized in that** the at least one electrical line of cabling runs between the power electronics (12) and the electrical winding of the stator (10), in a gap, in particular an annular gap, present between the power electronics (12) and the stator.

6. Supercharger according to one of the preceding claims, **characterized in that** the cooling jacket (17) is additionally provided for cooling air which emerges from the compressor (5) at a compressor outlet (22) and/or for cooling a compressor housing of the compressor (5).

7. Supercharger according to one of the preceding claims, **characterized in that** the cooling jacket (17) is connected to a cooling circuit in which a charge air cooler of the drive device (1) and/or bearing cooling means and/or bearing housing cooling means are present.

8. Drive device (1) having a supercharger (2) according to one or more of the preceding claims.

## Revendications

1. Compresseur d'alimentation (2), notamment turbocompresseur à gaz d'échappement, pour un dispositif d'entraînement (1), lequel possède un compresseur (5) pouvant être assisté ou entraîné électriquement au moyen d'un moteur à entrefer à fluide (8), le moteur à entrefer à fluide (8) disposé entre une entrée de compresseur et une roue à aubes de compresseur (6) du compresseur (5) possédant un rotor (9) en liaison fonctionnelle avec un arbre de palier (7) de la roue à aubes de compresseur (6) ainsi qu'un stator (10) qui enveloppe le rotor (9) au moins dans certaines zones dans le sens du pourtour en référence à un axe de rotation (11) de l'arbre de palier (7), **caractérisé en ce qu'**une électronique de commande (12) destinée à exciter au moins un enroulement électrique du stator (10) enveloppe l'axe de rotation (11) au moins dans certaines zones dans le sens du pourtour, une chemise réfrigérante (17) qui se trouve en contact de toucher avec le stator (10) et l'électronique de commande (12) étant présente pour le refroidissement du stator (10) et de l'électronique de commande (12), la chemise réfrigérante (17) étant disposée, vue dans le sens axial, entre l'électronique de commande (12) et un carter de compresseur du compresseur (5) et se trouvant en contact de toucher, par son pourtour intérieur, avec un pourtour extérieur du stator.

2. Compresseur d'alimentation selon la revendication 1, **caractérisé en ce que** la chemise réfrigérante (17) enveloppe au moins partiellement le stator (10) dans le sens du pourtour.

3. Compresseur d'alimentation selon l'une des revendications précédentes, **caractérisé en ce qu'**une surface frontale qui délimite la chemise réfrigérante (17) dans le sens axial repose contre l'électronique de commande, notamment une surface frontale de l'électronique de commande.

4. Compresseur d'alimentation selon l'une des revendications précédentes, **caractérisé en ce que** la chemise réfrigérante (17) repose contre le carter de compresseur avec une surface frontale supplémentaire à l'opposé de la surface frontale.

5. Compresseur d'alimentation selon l'une des revendications précédentes, **caractérisé en ce qu'**au moins une ligne électrique d'un câblage s'étend entre l'électronique de commande (12) et l'enroulement électrique du stator (10) dans un entrefer, notamment un entrefer annulaire, présent entre l'électronique de commande (12) et le stator.

6. Compresseur d'alimentation selon l'une des revendications précédentes, **caractérisé en ce que** la chemise réfrigérante (17) est en plus conçue pour le refroidissement de l'air sortant du compresseur (5) au niveau d'une sortie de compresseur (22) et/ou pour le refroidissement d'un carter de compresseur du compresseur (5) .

7. Compresseur d'alimentation selon l'une des revendications précédentes, **caractérisé en ce que** la chemise réfrigérante (17) est raccordée à un circuit de refroidissement dans lequel se trouve un refroidisseur d'air de suralimentation du dispositif d'entraînement (1) et/ou un refroidissement de palier et/ou un refroidissement de logement de palier.

8. Dispositif d'entraînement (1) comprenant un compresseur d'alimentation (2) selon l'une ou plusieurs des revendications précédentes.
